# EUROPEAN PATENT APPLICATION

(11) **EP 4 807 211 A1**
(43) Date of publication of application: **16.09.2026**
(21) Application number: 26164422.3
(22) Date of filing: 12.03.2026
(51) Int. Cl.: F16F 15/26, F16F 15/28

(54) **BALANCING SYSTEM FOR ENGINES COMPRISING AT LEAST ONE THREE-CYLINDER BANK**

(30) Priority: 14.03.2025 IT 202500005294
(71) Applicant: CNH Industrial Italia S.p.A., 10156 Torino (IT)
(72) Inventor: D'Epiro, Clino, 10156 Turin (IT)
(74) Representative: CNH Industrial IP Department

(57) **Abstract**

Balancing system for engines comprising at least one three-cylinder bank comprising a first eccentric mass (MA) fixed in rotation with one end of a crankshaft (CS), a second eccentric mass (MB) rotatably associated with said end in a coaxial manner with the crankshaft, a primary gear wheel (M2) fixed or coinciding with a piston-counter-weight of the crankshaft and a transmission (T) arranged to transmit the motion from the primary gear wheel (M2) to the second eccentric mass (MB), so that the second eccentric mass is counter-rotating with respect to the primary gear wheel (M2).

## Description

### Field of the invention

The present invention relates to the field of systems for suppressing vibrations generated by a crankshaft of an internal combustion engine.

### State of the art

Three-cylinder engines are becoming more widespread in passenger vehicles. They are also used in agricultural and work vehicles, in particular to power agricultural tractors, where the engine is an integral part of the frame and the rigid attachment to the front axle and rear bridge significantly reduces the propagation of the vibration typical of these engines.

In the field of earth-moving machinery such as mechanical shovels and excavators and in work vehicles in general, the engine is not an integral part of the frame, but is suspended from it by means of special brackets equipped with so-called silent-blocks, generally made of rubber.

It is known that a three-cylinder engine with cranks out of phase by 120° has the alternating forces of the first and second order naturally balanced. However, the moments are not balanced, since the engine of this type does not have an axis of symmetry. These moments cause the ends of the crankshaft to follow an approximately elliptical trajectory within a plane perpendicular to the longitudinal direction defined by the crankshaft. This approximately elliptical trajectory of each end is determined by a pair of counter-rotating force vectors which have different modulus between them. "Counter-rotating" means that they rotate in opposite directions with the same angular speed.

Generally, the vector with the largest modulus is the one that rotates in accordance with the rotation of the crankshaft.

This force vector is generally balanced at each end by means of an eccentric mass fixed to the end of the crankshaft, for example next to the pulley that drives the belt or chain of the services and for example next to the flywheel arranged to drive the rotation of the vehicle driveline.

The other force vector, counter-rotating with respect to the crankshaft, can be balanced with a counter-rotating shaft driven by the crankshaft by means of a pair of toothed wheels fitted respectively on the crankshaft and on the counter-rotating shaft.

This solution requires designing the base in such a way as to be able to accommodate the counter-rotating shaft. When the counter-rotating shaft is not necessary, as in the case of agricultural tractors, the base still includes the support elements for the counter-rotating shaft, creating an unnecessary bulk.

Unless specifically excluded in the detailed description that follows, what is described in this chapter is to be considered as an integral part of the detailed description.

### Summary of the invention

The purpose of the present invention is to present a balancing system for three-cylinder engines or engines comprising multiple three-cylinder banks, more compact and effective than the solutions of the prior art or in any case alternative to the solutions of the prior art.

The basic idea of the present invention is that, at each end of the crankshaft, an eccentric mass is rotatably associated, driven in rotation by the crankshaft by means of a transmission. The eccentric mass is fitted on the crankshaft so that its axis of rotation coincides with the axis identified by the crankshaft, thus the crankshaft and the counter-rotating shaft are coaxial between each other. According to a first preferred variant of the invention, the transmission comprises a double bevel gear coupling comprising a primary bevel gear fixed on the crankshaft, in a position proximal to or coinciding with a piston counter-weight, a bevel pinion, fixed in rotation to a main bearing cap, and a secondary bevel gear fixed with or defining the eccentric mass, in which the primary bevel gear, the bevel pinion and the secondary bevel gear mesh with each other.

A configuration is created that resembles the coupling of a satellite with two sun gears. However, the satellite, defined by the aforementioned bevel pinion, is rotatably fixed to the relative main bearing cap, without being able to perform any revolution movement typical of a satellite. The main bearing cap, therefore, performs two functions:
- It supports the bevel pinion,
- It supports the crankshaft.

According to a second preferred variant of the invention, the primary gear wheel and the secondary gear wheel have straight teeth, i.e. the teeth are cylindrical, and the motion is transmitted from the primary gear wheel to the secondary gear wheel by means of a secondary shaft supporting a first and a second pinions, in which the first pinion meshes with the primary gear wheel and the second pinion meshes with an idle gear which, in turn, meshes with the secondary gear wheel.

Both the secondary shaft and the idle gear are supported by a main bearing cap. This main bearing cap therefore performs three functions:
- It supports the secondary shaft,
- It supports the idle gear,
- It supports the drive shaft.

Advantageously, the eccentric mass is coaxial with the drive shaft, therefore, compared to the solution with the countershaft, the balancing of the moments is optimal. Advantageously, when it is not necessary to balance the engine, it is sufficient to remove the eccentric mass and the bevel pinion or the secondary shaft and the idle gear. Advantageously, the eccentric mass is in a position such that it does not hit the oil or in any case it is easily possible to obtain a compartment in the crankcase separate from the oil pan. This leads to a reduction of the mechanical losses.

The dependent claims describe preferred variants of the invention, forming an integral part of this description.

### Brief description of the figures

Further objects and advantages of the present invention will be apparent from the following detailed description of an embodiment thereof (and variations thereof) and the accompanying drawings given purely for explanatory and non-limiting purposes, in which:
Figure 1 shows a side and schematic view of a portion of a three-cylinder engine according to a first variation of the present invention;
Figure 2 shows a side and schematic view of a portion of a three-cylinder engine according to a second variation of the present invention.

The same reference numbers and letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of the present application as described below.

### Detailed description

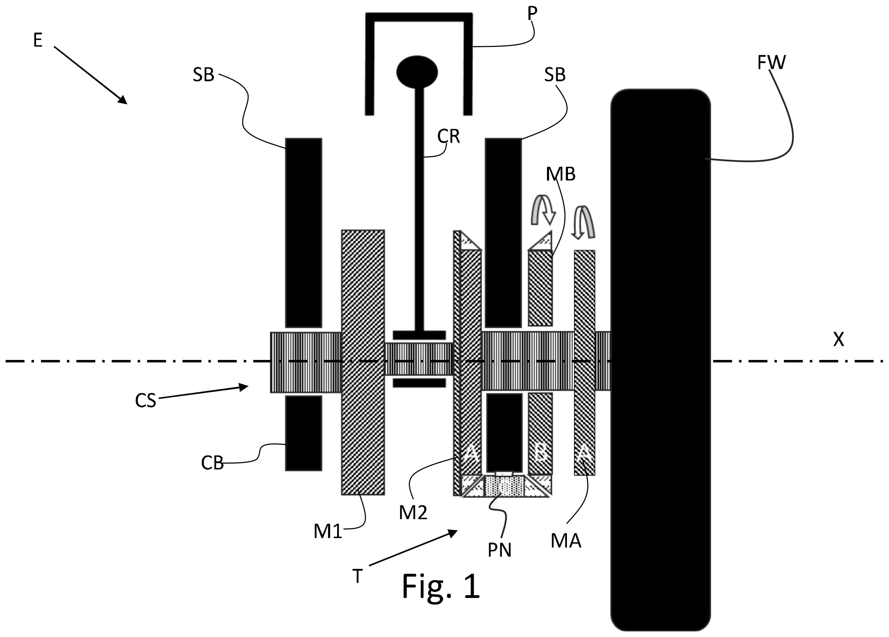

Figure 1 shows a portion of a three-cylinder engine E.

A piston P connected to the crankshaft CS by a connecting rod CR can be recognized.

The crankshaft is rotatably fixed to the crankcase (not shown) by means of the main bearings SB.

As is known, the main bearings are fixed to the crankcase of the engine.

The crankshaft is fixed to the main bearings by means of the main bearing caps CB in order to rotatably support the crankshaft CS. As is known, bushings are placed between the fixed parts and the crankshaft.

The crankshaft CS defines a pair of piston-counter-weights M1, M2 which have the function of balancing the inertia of the piston P. Generally, the end pistons are equipped with piston-counter-weights, while the central piston can be equipped with or without piston-counter-weights.

According to the present invention, the piston-counter-weight M2 closest to the end of the crankshaft defines or is fixed to a gear wheel: hereinafter this gear wheel is defined as the "primary gear wheel".

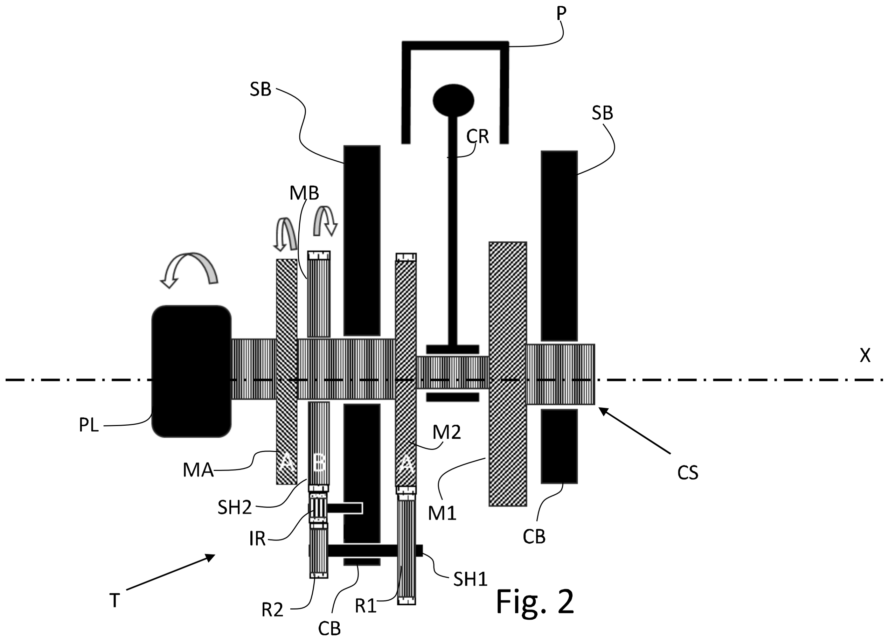

Figure 2 refers to another variant of the invention.

While figure 1 shows the end of the crankshaft intended to support the flywheel FW, figure 2 shows the end of the crankshaft intended to support the pulley PL which drives the services in rotation. However, it is understood that the solution of figure 1 can be implemented at both ends of the crankshaft, just as the solution of figure 2 can be implemented at both ends of the crankshaft.

According to the present invention, a second eccentric mass MB is fitted onto the crankshaft in a rotatable manner and coaxial with the crankshaft, where the crankshaft defines the rotation axis X. It is intended to be counter-rotating with respect to the crankshaft in order to balance the second of the rotating force vectors described above.

A first eccentric mass MA is instead fixed to the same end of the crankshaft to balance the first of the rotating vectors described above. The first eccentric mass MA can be operationally integrated into the flywheel and/or the pulley. The features of the second eccentric mass are not relevant.

The second eccentric mass MB is fixed to or defines a gear wheel, hereinafter referred to as the secondary gear wheel MB.

A transmission T is arranged to transmit motion between the primary gear wheel M2 and the secondary gear wheel.

The primary gear wheel M2 is immediately adjacent to the main bearing of one of the end pistons, so as to make the transmission as short as possible.

According to the variant of figure 1, the transmission consists of a bevel pinion that simultaneously meshes with the primary gear wheel and the secondary gear wheel, wherein the bevel pinion is rotatably supported by a main cap CB interposed between the primary gear wheel M2 and the secondary gear wheel MB.

According to the variant of figure 2, the transmission T consists of a secondary shaft SH1 fixedly supporting, at respective ends, a first pinion R1 and a second pinion R2 that meshes with the primary gear wheel M2 and the secondary gear wheel MB respectively. While one of the pinions meshes directly with the respective gear wheel, the other meshes indirectly by means of an idle gear IR which has the purpose of reversing the rotational motion of the secondary gear wheel with respect to the primary gear wheel.

Obviously, the primary gear wheel, the secondary gear wheel and the pinions R1, R2 are sized so as to keep the angular velocity module of the second eccentric mass unchanged with respect to the crankshaft.

The main bearing cap also supports the idle gear IR.

Advantageously, the idle gear IR and the secondary shaft SH1 of figure 2 as well as the pinion PN of figure 1 can be associated with the relative main bearing cap CB before fixing the same cap on the relative main bearing support. This significantly simplifies the assembly and maintenance operations of the engine.

In figures 1 and 2, the second eccentric mass, one-piece or fixed with the secondary gear wheel MB is shown interposed between the first eccentric mass MA and the main bearing support SB. However, nothing prevents the first eccentric mass from being interposed between the second eccentric mass and the SB bench support.

Implementation variants to the non-limiting example described are possible, without however departing from the scope of protection of the present invention, including all the embodiments equivalent for a technician in the field, to the content of the claims.

From the above description, the technician in the field is able to realize the object of the invention without introducing further construction details.

## Claims

1. Balancing system for engines comprising at least one three-cylinder bank comprising a first eccentric mass (MA) fixed in rotation with one end of a crankshaft (CS), a second eccentric mass (MB) rotatably associated with said end in a coaxial manner with the crankshaft, a primary gear wheel (M2) fixed or coinciding with a piston-counter-weight of the crankshaft and a transmission (T) arranged to transmit the motion from the primary gear wheel (M2) to the second eccentric mass (MB), so that the second eccentric mass is counter-rotating with respect to the primary gear wheel (M2).

2. System according to claim 1, wherein the second eccentric mass is fixed with or defined by a secondary gear wheel.

3. System according to claim 2, wherein said primary gear wheel (M2) and said secondary gear wheel (MB) are conical and wherein said transmission (T) consists of a conical pinion (PC) which simultaneously engages said primary gear wheel (M2) and said secondary gear wheel (MB) and wherein the conical pinion is supported in rotation by a main cap (CB).

4. System according to claim 2, wherein said primary gear wheel (M2) and said secondary gear wheel (MB) have cylindrical teeth and wherein said transmission (T) consists of a secondary shaft (SH1) fixedly supporting, at respective opposite ends, a first pinion (R1) and a second pinion (R2) which mesh respectively with the primary gear wheel (M2) and the secondary gear wheel (MB) and wherein one of said first pinion and said second pinion meshes directly with the respective primary or secondary gear wheel and the other pinion meshes indirectly with the respective secondary or primary gear wheel by means of an idle gear (IR).

5. System according to claim 4, wherein said secondary shaft (SH1) and said idle gear (IR) are rotatably supported by a main cap (CB).

6. System according to any of the preceding claims 1 - 5, wherein said crankshaft piston-counter-weight is closest to said crankshaft end.

7. System according to claim 6, wherein said second eccentric mass (MB) is operatively interposed between a main bearing (SB) and said first eccentric mass (MA).

8. System according to claim 7, wherein said first eccentric mass is operatively fixed or integrated into a pulley (PL) or a flywheel (FW) of the crankshaft.

9. System according to claim 6, wherein said first eccentric mass (MA) is operatively interposed between a main bearing (SB) and said second eccentric mass (MB).

10. System according to any of the preceding claims 7 - 9, wherein said primary gear wheel (M2) is immediately adjacent to said main bearing (SB).

11. Three-cylinder and multiple three-cylinder internal combustion engine comprising
- a crankshaft (CS) to which a piston (P) and at least one balancing plate (M1, M2) of the piston are operatively connected,
- a balancing system comprising a first eccentric mass (MA) fixed in rotation with one end of the crankshaft (CS), a second eccentric mass (MB) rotatably associated with said end in a coaxial manner with the crankshaft, a primary gear wheel (M2) fixed or coinciding with said at least one piston-counter-weight (M1, M2) and a transmission (T) arranged to transmit the motion from the primary gear wheel (M2) to the second eccentric mass (MB), so that the second eccentric mass is counter-rotating with respect to the primary gear wheel (M2).

12. Work vehicle comprising the internal combustion engine according to claim 11.
